# EUROPÄISCHE PATENTSCHRIFT

(11) **EP 1 191 332 B1**
(45) Veröffentlichungstag und Bekanntmachung des Hinweises auf die Patenterteilung: **08.05.2013**
(21) Anmeldenummer: 01106136.3
(22) Anmeldetag: 13.03.2001
(51) Int. Cl.: G01N 27/414, G01N 27/00

(54) **Suspended Gate Field Effect Transistor (SGFET) mit Polymerbeschichtung als Feuchtesensor**
Suspended Gate Field Effect Transistor (SGFET) with polymer coating used as humidity sensor
Suspended Gate Field Effect Transistor (SGFET) avec une couche en polymère utilisé comme capteur d'humidité

(30) Priorität: 25.07.2000 DE 10036178
(43) Veröffentlichungstag der Anmeldung: 27.03.2002
(73) Patentinhaber: Micronas GmbH, 79108 Freiburg i. Br. (DE)
(72) Erfinder: Fleischer, Maximilian, Dr., 85635 Höhenkirchen (DE); Meixner, Hans, Prof., 85540 Haar (DE); Ostrick, Bernhard, 81541 München (DE); Pohle, Roland, Dr., 85570 Herdweg (DE); Simon, Elfriede, Dr., 80639 München (DE)
(74) Vertreter: Koch Müller Patentanwaltsgesellschaft mbH

(56) Entgegenhaltungen:
- EP-A- 1 103 808
- DE-A- 2 947 050
- DE-A- 19 849 932
- US-A- 4 515 653
- US-A- 4 730 479
- US-A- 4 764 797
- US-A- 4 878 015
- PATENT ABSTRACTS OF JAPAN vol. 006, no. 133 (P-129), 20. Juli 1982 (1982-07-20) & JP 57 056746 A (HITACHI LTD), 5. April 1982 (1982-04-05)
- PATENT ABSTRACTS OF JAPAN vol. 001, no. 148 (E-069), 29. November 1977 (1977-11-29) & JP 52 087381 A (MATSUSHITA ELECTRIC IND CO LTD), 21. Juli 1977 (1977-07-21) & DATABASE WPI Section Ch, Week 197736 Derwent Publications Ltd., London, GB; Class A14, AN 1977-63492Y
- "SUSPENDED GATE FETS AS GAS SENSORS" ELECTRONIC ENGINEERING, MORGAN-GRAMPIAN LTD. LONDON, GB, Bd. 64, Nr. 787, 1. Juli 1992 (1992-07-01), Seite 10,13 XP000307786 ISSN: 0013-4902
- EISELE I ET AL: "Low power gas detection with FET sensors" SENSORS AND ACTUATORS B, ELSEVIER SEQUOIA S.A., LAUSANNE, CH, Bd. 78, Nr. 1-3, 30. August 2001 (2001-08-30), Seiten 19-25, XP004297630 ISSN: 0925-4005

## Beschreibung

### Feuchtesensor und Verwendung

Die Erfindung betrifft einen Suspended Gate-FET (SOFET)-Sensor des Oberbegriffs des Anspruchs 1. Ein solcher SGFET-Sensor ist 8.B. aus DE 198 49 932 bekannt.

Feuchtesensoren sind neben Gassensoren in vielen Lebensbereichen verbreitete Messelemente. So spielt die Messung der Feuchtigkeit eines Gases als Kenngröße für viele Bereiche wie für die Kraftfahrzeug-Luftgüte, die Branderkennung, die Raumluftüberwachung, den Wäschetrockner oder für die Qualitätskontrolle von Nahrungsmitteln eine wesentliche Rolle. Darüber hinaus stehen viele bei Raumtemperatur durchgeführte gemssensitive Reaktionen von Sensoren für bestimmte Gase in einem direkten Zusammenhang mit dem Feuchtigkeitsgehalt. Zum einen kann der Feuchtegehalt zu veränderten Gassensitivitäten führen und zum anderen gibt es viele Gasreaktionen, die erst durch die Anwesenheit der Feuchtigkeit ermöglicht werden (Literaturstelle 1). Um diese Einschlussgröße der Feuchtigkeit zu bestimmen und gegebenenfalls die Ergebnisse der Gasdetektion zu korrigieren, ist es oft notwendig, parallel zur eigentlichen Gasdetektion den Feuchtegehalt zu messen.

Im Stand der Technik ist eine Reihe von kommerziellen Feuchtesensoren, die im Wesentlichen nach vier verschiedenen Prinzipien arbeiten, bekannt:
- Kapazitive Luftfeuchtemessungen können kostengünstig durchgeführt werden. Hierbei wird eine hygroskopische Polymerschicht verwendet, deren Dielektrizitätskonstante durch die Wasseraufnahme entsprechend der relativen Luftfeuchtigkeit verändert wird. Die somit veränderte Kapazität eines Dünnschichtkondensators ist direkt proportional zur relativen Feuchte (Literaturstelle 2).
- Psychrometrische Luftfeuchtemessung ist relativ kostenintensiv. Psychrometer sind Geräte, die mit einem trockenen und einem befeuchteten Temperaturfühler ausgestattet sind. Aufgrund der Verdunstung kühlt sich der Feuchtigkeitsfühler ab. Durch die Bestimmung der Temperaturdifferenz zwischen beiden Fühlern kann die Luftfeuchtigkeit ermittelt werden.
- Hygrometrische Luftfeuchtemessung ist ebenfalls aufwendig. Hygrometrische Messwertgeber sind mit einem Material ausgestattet, welches sich je nach Feuchtigkeit dehnt oder zusammenzieht. Verwendet wird organisches Material, Kunststoff oder porös gesinterte keramische Materialien wie Aluminiumoxid oder Zinkoxid.
- Eine weitere Feuchtigkeitsmessmethode ist durch ein Taupunktspiegelhygrometer gegeben. Bei diesem sehr präzise messenden Verfahren wird die Kondensation von Wasserdampf bei Taupunktsunterschreitung ausgewertet. Die Temperatur einer verspiegelten Fläche wird soweit abgekühlt, bis diese gerade anfängt zu beschlagen. Die in diesem Moment gemessene Temperatur entspricht der Taupunkttemperatur.

Nachteil dieser aufgezählten Messsysteme ist, dass sie sehr kostenintensiv sind auf die jeweilige Anwendung und den Messbereich abgestimmt werden müssen bzw. für viele Anwendungen nicht geeignet sind.

Ein wesentliches Problem, zu dessen Lösung die Feuchtigkeitsmessung dient, ist die Querempfindlichkeit der Feuchtigkeit auf viele Gasmessverfahren. Um diesem Problem zu begegnen, gibt es Bestrebungen, die gassensitiven Materialien der Gassensoren dahingehend weiter zu entwickeln, dass sie nur geringe Sensitivität gegenüber Wasser, bei gleichzeitig hoher Sensitivität zu einem zu detektierenden Gas besitzen (Literaturstelle 7). Andererseits werden auch Untersuchungen durchgeführt, Detektionsgas und Feuchtigkeit gleichzeitig aber mit verschiedenen Schichten zu messen und mittels Mustererkennung oder Frequenzanalyse die Gasdetektion durchzuführen (Literaturstellen 3 und 4). Die Auslesung dieser Feuchtesensoren erfolgt über Oberflächenwellenfilter, durch Widerstandsmessungen oder anhand der Änderung von Dielektrizitätseigenschaften (Literaturstellen 5 und 6). Derartige Ausleseverfahren sind mit sehr hohen Kosten, im Wesentlichen für die Elektronik, verbunden bzw. erfordern häufig eine Rekalibrierung.

Der Erfindung liegt die Aufgabe zugrunde, einen SG'FET-Sensor mit weitem Einsatzfeld, zuverlässiger und reproduzierbarer Signalauswertung und kostengünstigem Aufbau bereitzustellen. Die Lösung dieser Aufgabe geschieht durch Merkmalskombination des Anspruchs 1.

Die Erfindung basiert auf der Erkenntnis, dass durch die Kombination von Auslesung des Sensorsignals mittels Austrittsarbeitsänderung bei gleichzeitiger Verwendung eines Feldeffekttransistors, der ein entsprechend sensitives Material als Bestandteil seines Gates aufweist, ein kostengünstiger Sensor dargestellt werden kann. Dabei ist der Einsatz von Polymeren als feuchtesensitives Material besonders vorteilhaft. Die Entwicklung eines auf organischen Verbindungen basierenden Feuchtesensors, dessen Signal mittels Austrittsarbeitsänderung ausgelesen wird, bietet den Vorteil, dass der Sensor bei Raumtemperatur betrieben werden kann. Hierbei können Messungen im Gegensatz zu bisher üblichen geheizten resistiven Sensoren bei reduziertem Heizenergiebedarf durchgeführt werden. Insbesondere durch die Einsparung der Heizenergie können kostengünstige Anwendungen erschlossen werden. Darüber hinaus ergeben sich Vorteile in Richtung einer freien Auswahl des sensitiven Materials sowie einer relativ einfachen Materialpräparation.

Es ist weiterhin vorteilhaft verschiedene organische Polymere einzusetzen, wie beispielsweise Polyamide, Polyvinyl, Pyrrolidon, Polyimide oder Ethylcellulose. Des weiteren können in vorteilhafterweise dotierte Polymerverbindungen als feuchtesensitive Schichten eingesetzt werden. Zur Dotierung wird insbesondere Kobaltchlorid oder Kupferchlorid verwendet.

Durch die Auslesung der Austrittsarbeitsänderung über einen neu entwickelten Feldeffekttransistor wird ein kleiner und kostengünstiger Aufbau eine Gassensorsystems ermöglicht. Durch die Kombination von verschiedenen Schichten, feuchtesensitiven Schichten und gassensitiven Schichten, in einer Sensoranordnung können bei bekannter Temperatur Feuchteeinflüsse im Vergleich der zu messenden Gasreaktion bestimmt werden. Dies ermöglicht einen direkten Signalabgleich und eine spezifische Bewertung des eigentlichen Gassensorsignals. Somit wird der Feuchtesensor in einer derartigen Sensoranordnung direkt dazu herangezogen, bei Gassensoren Querempfindlichkeiten auf Feuchtigkeit zu eliminieren.

Die Kostenreduzierung zur Herstellung eines derartigen Sensors resultiert im Wesentlichen aus dem verwendeten Detektionsverfahren auf der Basis der Messung der Austrittsarbeitsänderung.

Weitere vorteilhafte Ausgestaltungen können den Unteransprüchen entnommen werden.

Im folgenden werden anhand von schematischen Figuren nicht einschränkende Ausführungsbeispiele beschrieben.
- Figur 1: zeigt den Aufbau eines gassensitiven Feldeffekttransistors,
- Figur 2: zeigt eine Ausführung mit feuchte- und gassensitiver Schicht in einem Feldeffekttransistor, zugleich Gassensor,
- Figur 3: zeigt die Kennlinie und die Ansprechzeiten einer Ethylcellulose-CoCl₂-Schicht bei unterschiedlichen Feuchtegehalten,
- Figuren 4 und 5: zeigen Kennlinien und Ansprechzeiten von bestimmten Polyamiden.

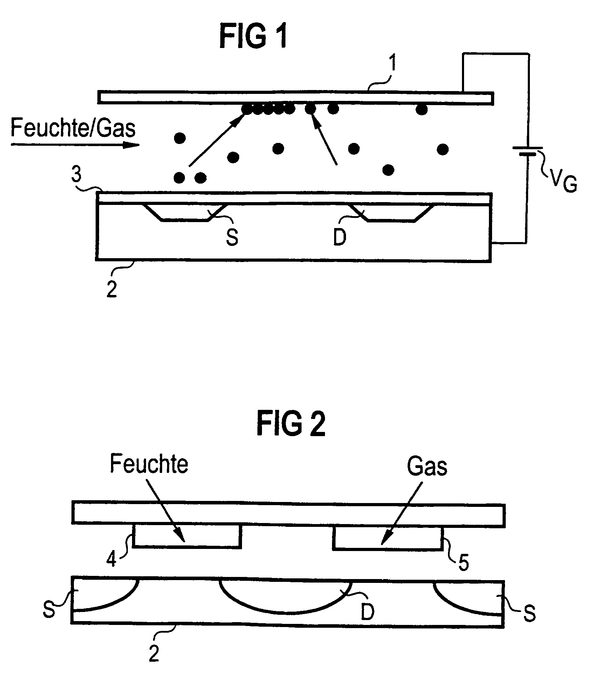

Figur 1 zeigt das Prinzip eines Feldeffekttransistors zur Detektion von Feuchtigkeit bzw. Gas. Die durch die Anwesenheit eines Zielgases entstehende feuchtigkeits- bzw. gasinduzierte Spannung V_{G} wird entsprechend zwischen Substrat 2 und sensitiver Schicht 1 abgegriffen. In Figur 1 sind die Bestandteile des Feldeffekttransistors FET, sowie in dem Substrat 2 dargestellte Source- und Drain-Bereiche gekennzeichnet. Die Kanalisolierung 3 ist in Form einer das Substrat, den Source- und dem Drain-Bereich überdeckenden Schicht ausgebildet. Die in Figur 1 dargestellte Variante eines Feldeffekttransistors weist einen Luftspalt zwischen der Kanalisolierung 3 und einem sensitiven Material auf. Dies entspricht dem Prinzip eines Suspended Gate-FET. Als Grundidee liegt hier eine frei wählbare Sensorschicht vor, wobei bei Gasadsorption/Oberflächenreaktion an dieser Schicht eine reversible Änderung der Austrittsarbeit auftritt. Diese Potentialdifferenz, welche in der Größenordnung von 50 mV liegt, koppelt kapazitiv über den Luftspalt an die Kanaloberfläche und induziert Ladungen in die FET-Struktur.

In Figur 2 sind gleichzeitig eine feuchtesensitive 4 und eine gassensitive Schicht 5 in einer einzigen Anordnung von zwei integrierten Feldeffekttransistoren vorhanden. Die sensitiven Schichten 4, 5 sind jeweils zwischen den gegenüber liegenden Source- und Drain-Bereichen auf dem Substrat 2 positioniert. Der Abgriff von entsprechenden Sensorsignalen erfolgt analog zu Figur 1.

Mit dem derart vorgestellten Gassensor ist also zum einen eine kostengünstige Realisierung für die direkte Entwicklung von Feuchtesensoren für verschiedene Anwendungen möglich, wie beispielsweise Wäschetrockner, Kraftfahrzeug-Luftgüte, Klimaanlagen usw.. Zum anderen können durch Kombination von gassensitiver Schicht und feuchtesensitiver Schicht gassensitive Effekte, die durch den Feuchtigkeitsgehalt beeinflusst sind, korrigiert werden.

Die Kombination des Messprinzipes der Austrittsarbeitsänderung an sensitiven Schichten und der Verwendung von organischen Materialien für die sensitive Schicht kann somit zur Bestimmung der Feuchte in Gasen herangezogen werden, wobei ein Sonderfall die direkte Verwendung dieser Information zur Eliminierung von Querempfindlichkeiten aufgrund vorhandener Feuchte bei der Gasdetektion ermöglicht. Damit ergibt sich gleichzeitig eine kostengünstige sogenannte Lowpower/Lowcost-Variante eines Gassensorsystems, da Gassensoren entsprechend der Figuren 1 und 2 kostengünstig herzustellen sind. Zusätzlich können derartige Feuchtesensoren mit der Bestimmung der Gastemperatur kombiniert werden, so dass sämtliche weiteren hygroskopischen Parameter wie Taupunkt, relative Luftfeuchte, Sättigungsdampfdruck oder Partialdampfdruck ermittelbar sind.

Untersuchungen verschiedener Verbindungen zeigten, dass organische Polymere wie beispielsweise Polyimide, Polyamide, Ethylcellulose und dotierte Polymere für eine direkte Messung der Feuchte mittels Austrittsarbeitsänderung geeignet sind.

Darüber hinaus konnte durch Dotierung von organischen Polymeren mit hygroskopischen Metallsalzen wie beispielsweise mit Kobaltchlorid oder Kupferchlorid eine Steigerung der Feuchtesensitivität gegenüber den undotierten Polymeren erzielt werden.

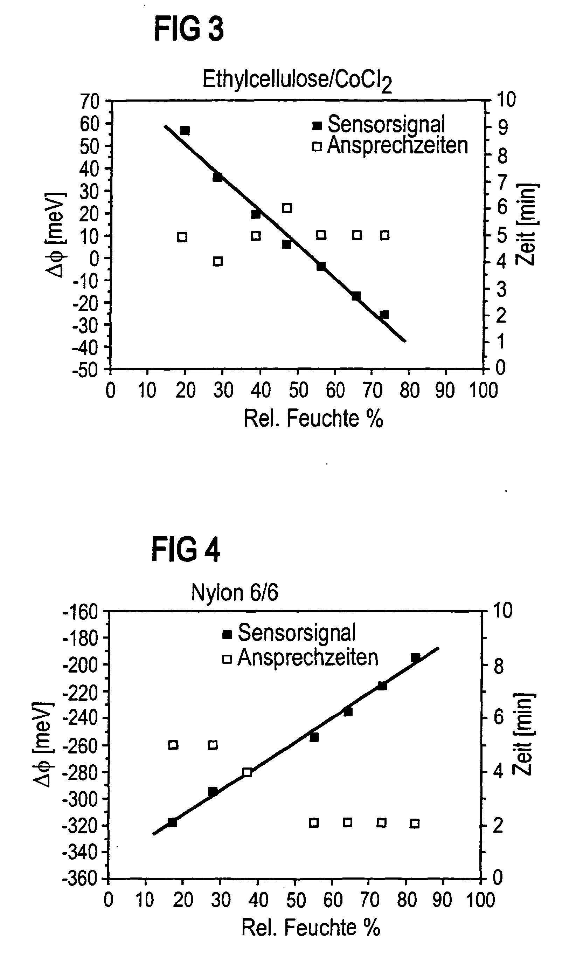

Figur 3 zeigt die Kennlinie und Ansprechzeiten einer mit Kobaltchlorid dotierten Ethylcellulose-Schicht bei unterschiedlichen Feuchtegehalten. Das Sensorsignal wird in Millielektronenvolt gemessen und zeigt eine annähernd lineare Abhängigkeit von der relativen Feuchte des Messgases.

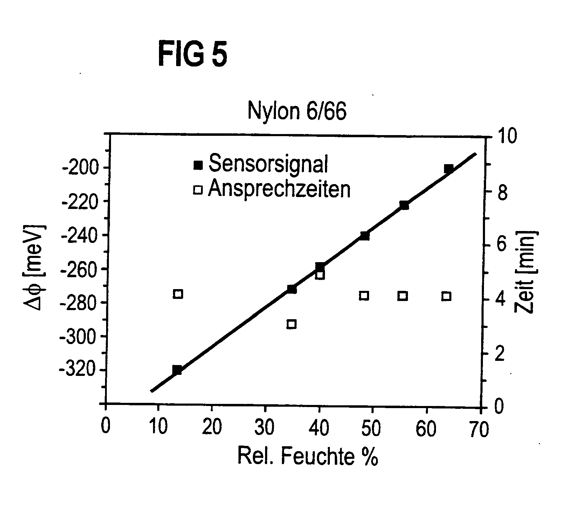

Die Figuren 4 und 5 zeigen Kennlinien und Ansprechzeiten von verschiedenen Polyamid-Derivaten. In Figur 4 wurde eine feuchtigkeitssensitive Schicht aus Nylon 6/6 verwendet und in Figur 5 eine aus Nylon 6/66. Das Signal der jeweiligen Sensoren steigt mit zunehmender Feuchtekonzentration an. Bei einer Änderung der relativen Feuchte von 20% auf 80% ergibt sich jeweils ein Sensorsignal von 95 meV bzw. 135 meV. Dies entspricht der feuchtigkeitsinduzierten Spannung aufgrund der Austrittsarbeitsänderung an der feuchtigkeitssensitiven Schicht. Querempfindlichkeiten hinsichtlich der Messungen entsprechend Figur 4 und 5 auf andere Bestandteile eines Gasgemisches können nach wie vor auftreten.

Die Polymerverbindungen wie z.B. Polyvinylyprrolidon werden mittels Siebdrucktechnik, Sprühfilm oder Tampondruck als strukturierte Schicht auf das Gate des SG-FET aufgebracht. Durch die Verwendung einer Polymer-Paste werden bestimmte Schichtstrukturen mit festgelegter Schichtdicke hergestellt die wesentlich die Sensitivität des Sensors beeinflussen. Das Polymer Polyvinylpyrrolidon hat z.B. bei einer Schichtdicke von 4.5µm eine um 50% höhere Sensitivität als mit einer Schichtdicke von 2.5µm. Diese Paste besteht aus dem Polymer und zwei oder mehreren Lösungsmitteln, die in einem bestimmten Verhältnis (z.B. 2 Teile Polyvinylpyrrolidon + 16 Teile Terpineol + 1 Teil Hexan) gemischt werden um die entsprechende Viskosität zu erhalten, die wesentlich für die Schichtstruktur und Schichtdicke ist.

### Literaturliste

[1] T. Doll, J. Lechner, I. Eisele, K.-D. Schierbaum, W. Göpel: Ozone detection in the ppb range with work function sensors operating at room temperature, Sensors and Actuators B 34 (1996) 506-510
[2] M. Matsuguchi, S. Umeda, Y. Sadaoka, Y. Sakai: Characterization of polymers for a capacitive-type humidity sensor based on water sorption behaviour, Sensors and Actuators B 49 (1998) 197-185.
[3] K. Korsah, C. L. Ma, B. Dress: Harmonic frequency analysis of SAW resonator chemical sensors: application to the detection of carbon dioxide and humidity, Sensors and Actuators B 50 (1998) 110-116
[4] A. E. Hoyt, A. J. Ricco, J. W. Bartholomew, G. C. Osburn: Simultaneous measurement of CO2 and humidity using a pair of SAW devices and cluster-analysis pattern recognition, in: Tagungsband Transducers '97, Chicago 1997, 1339-1342
[5] D. Rebière, C. Déjous, J. Pistré, J. F. Lipskier, R. Planade: Synthesis and evaluation of fluoropolyol isomers as saw microsensor coatings: role of humidity and temperature, Sensors and Actuators B 49 (1998) 139-145
[6] R. Buchhold, A. Nakladal, G. Gerlach, P. Neumann: Design studies on piezoresistive humidity sensors, Sensors and Actuators B 53 (1998) 1-7
[7] J. Clements, N. Boden, T. D. Gibson, R. C. Chandler, J. N. Hulbert, E. A. Ruck-Keene: Novel, self-organising materials for use in gas sensor arrays: beating the humidity problem, Sensors and Actuators B 47 (1998) 37-42

## Patentansprüche

1. SGFET-Sensor nach dem Prinzip einer Messung von Austrittsarbeiten mit mindestens einer gassensitiven Schicht (1; 5) als Bestandteil eines Gates des SGFET, wobei die sensitive Schicht (1) durch einen Luftspalt von einer ein Substrat (2), einen Sourcebereich (S) und einen Drainbereich (D) eines FET überdeckenden Kanalisolierung (3) beabstandet ist,
**dadurch gekennzeichnet, dass** im Substrat (2) ein zweiter FET integriert ist, dass eine feuchtesensitive Schicht (4) gegenüber dem Drainbereich (D) und Sourcebereich (S) des zweiten FET angeordnet ist, und dass die gassensitive Schicht (1, 5) und feuchtesensitive Schicht (4) auf einem gemeinsamen Träger sitzen, wobei die feuchtesensitive Schicht (4) aus einem Polymermaterial besteht.

2. SGFET-Sensor nach Anspruch 1, bei dem die feuchtesensitive Schicht (4) aus einem organischen Polymer besteht wie Polyamid, Polyvinyl, Pyrrolidon, Polyimid oder Ethylcellulose.

3. SGFET-Sensor nach Anspruch 1 oder 2, bei dem ein Polymer mit Kobaltchlorid oder Kupferchlorid dotiert ist.

4. SGFET-Sensor nach einem der vorhergehenden Ansprüche, bei dem zusätzlich eine Temperaturmesseinheit vorhanden ist.

5. Verfahren zur Herstellung eines SGFET-Sensors entsprechend einem der Ansprüche 1 bis 4, bei dem die als sensitive Schicht dienende Polymerverbindung mittels Siebdrucktechnik, Sprühfilm oder Tampondruck als strukturierte Schicht auf einen SG-FET (Suspended Gate FET) aufgebracht wird.

6. Verfahren nach Anspruch 5, bei dem die hergestellte Schichtdicke ungefähr 4,5 µm beträgt.

7. Verfahren nach Anspruch 5 oder 6, bei dem eine beim Druck verwendete Paste aus dem Polymer und zwei oder mehreren Lösungsmitteln besteht.

8. Verfahren nach Anspruch 7, bei dem ein Verhältnis von 2 Teilen Polyvinylpyrrolidon, 16 Teilen Terpineol und einem Teil Hexan vorliegt.

## Claims

1. SGFET sensor according to the principle of measurement of output work with at least one gas-sensitive layer (1, 5) as a component of a gate of the SGFET, wherein the sensitive layer (1) is spaced by an air gap from one of a substrate (2), a source region (S) and a drain region (D) of a channel insulation (3) covering an FET, **characterised in that** a second FET is integrated in the substrate (2), that a moisture-sensitive layer (4) is arranged opposite the drain region (D) and source region (S) of the second FET and that the gas-sensitive layer (1, 5) and moisture-sensitive layer (4) are seated on a common support, wherein the moisture-sensitive layer (4) consists of a polymer material.

2. SGFET sensor according to claim 1, in which the moisture-sensitive layer (4) consists of an organic polymer such as polyamide, polyvinyl, pyrrolidon, polyimide or ethylcellulose.

3. SGFET sensor according to claim 1 or 2, in which a polymer is doped with cobalt chloride or copper chloride.

4. SGFET sensor according to any one of the preceding claims, in which a temperature measuring unit is additionally present.

5. Method of producing a SGFET sensor corresponding with one of claims 1 to 4, in which the polymer compound serving as sensitive layer is applied by means of a screenprinting technique, a spray film or pad-printing as a structured layer on an SGFET (Suspended Gate FELT).

6. Method according to claim 5, in which the layer thickness produced is approximately 4.5 microns.

7. Method according to claim 5 or 6, in which a paste used in the printing consists of a polymer and two or more solvents.

8. Method according to claim 7, in which a ratio of 2 parts of polyvinylpyrrolidon, 16 parts of terpineol and 1 part of hexane is present.

## Revendications

1. Capteur SGFET suivant le principe d'une mesure de travaux de sortie avec au moins une couche sensible au gaz (1; 5) comme composant d'une grille du SGFET, dans lequel la couche sensible (1) est espacée par une lame d'air d'un isolant de canal (3) recouvrant un substrat (2), une région de source (S) et une région de drain (D) d'un FET,
**caractérisé en ce qu'**un deuxième FET est intégré dans le substrat (2), **en ce qu'**une couche sensible à l'humidité (4) est disposée en face de la région de drain (D) et de la région de source (S) du deuxième FET, et **en ce que** la couche sensible au gaz (1, 5) et la couche sensible à l'humidité (4) sont posées sur un support commun, dans lequel la couche sensible à l'humidité (4) est composée d'un matériau polymère.

2. Capteur SGFET selon la revendication 1, dans lequel la couche sensible à l'humidité (4) se compose d'un polymère organique comme le polyamide, le polyvinyle, la pyrrolidone, le polyimide et l'éthylcellulose.

3. Capteur SGFET selon la revendication 1 ou 2, dans lequel un polymère est doté avec du chlorure de cobalt ou du chlorure de cuivre.

4. Capteur SGFET selon l'une quelconque des revendications précédentes, dans lequel il se trouve en outre une unité de mesure de la température.

5. Procédé de fabrication d'un capteur SGFET selon l'une quelconque des revendications 1 à 4, dans lequel on dépose le composé polymère faisant fonction de couche sensible sur un SG-FET (transistor à effet de champ à grille suspendue) au moyen d'une technique d'impression par sérigraphie, d'un film pulvérisé ou par impression au tampon faisant office de couche structurée.

6. Procédé selon la revendication 5, dans lequel l'épaisseur de couche produite vaut environ 4,5 µm.

7. Procédé selon la revendication 5 ou 6, dans lequel une pâte utilisée lors de l'impression se compose d'un polymère et de deux ou plusieurs solvants.

8. Procédé selon la revendication 7, dans lequel il existe une proportion de 2 parties de pyrrolidone de polyvinyle, 16 parties de terpinéol et une partie de hexane.
